# EUROPEAN PATENT APPLICATION

(11) **EP 2 199 100 A1**
(43) Date of publication of application: **23.06.2010**
(21) Application number: 08172496.5
(22) Date of filing: 22.12.2008
(51) Int. Cl.: B42D 15/10, B41M 3/14

(54) **SECURITY LAMINATES FOR SECURITY DOCUMENTS.**

(71) Applicant: Agfa-Gevaert N.V., 2640 Mortsel (BE)
(72) Inventor: Geuens, Ingrid, 2640, Mortsel (BE); Uyttendaele, Carlo, 2640, Mortsel (BE)
(74) Representative: Goedeweeck, Rudi

(57) **Abstract**

A security laminate for securing a security document comprising:
a) a biaxially stretched polyethylene terephthalate support; and
b) a thermosensitive layer coated on the support;

wherein the thermosensitive layer contains a binder, a substantially light-insensitive organic silver salt, an organic reducing agent and a toning agent selected from the group consisting of phthalimides, phthalazinones, benzoxazine diones and naphthoxazine diones.

Methods for manufacturing security documents are also disclosed.

## Description

### Technical Field

This invention relates to the security of information or data carriers, more particularly to securing cards and passports so that the identification data are not altered or modified and that the cards cannot thus be reused fraudulently.

### Background Art

Security laminates are traditionally used to protect documents or packages to ensure that the underlying items are not altered by containing an authentification feature making them difficult to counterfeit. Security laminates are particularly useful on identification cards such as driver's licenses, ID-cards and passports, and on other important documents such as certificates of title. Security laminates are also useful as tamper proof seals on medications, video cassettes, and compact discs.

Five features are particularly important when producing and using security laminates. First, once applied to an article it is important that the laminate is difficult to remove to ensure that the underlying item is not altered or subjected to tampering. Second, a desirable laminate is difficult if not impossible to duplicate by counterfeiters. Third, if tampering occurs it is important to quickly and accurately recognize an altered or counterfeit laminate. Fourth, it is important that manufacturing costs of the laminates are not prohibitively expensive. Fifth, when used on articles such as identification cards, it is important that the laminate has sufficient durability to withstand harsh treatment.

Security documents are widely used for various applications such as identification purposes (ID cards), financial transfers (credit cards), social security, etc. Such cards typically consist of a laminated structure consisting of various plastic layers wherein one or more layers carry information, e.g. alphanumeric information, logos and a picture of the card holder. Security Documents wherein the user can store digital information are also known, e.g. cards comprising a magnetic strip, optically recordable cards or cards comprising an electronic chip, so-called 'smart cards'.

A principal objective of such security cards is that it cannot be easily modified or reproduced in such a way that the modification or reproduction is difficult to distinguish from the original. Therefore, security cards are provided with security features which are difficult to modify or reproduce.

Information can be added to a card using various imaging techniques such as inkjet, electrophotography, dye sublimation, laser marking, laser engraving and diffusion transfer imaging. In literature, laser engraving is often incorrectly used for laser marking. While carbonization of material occurs in laser marking, in laser engraving the material is ablated.

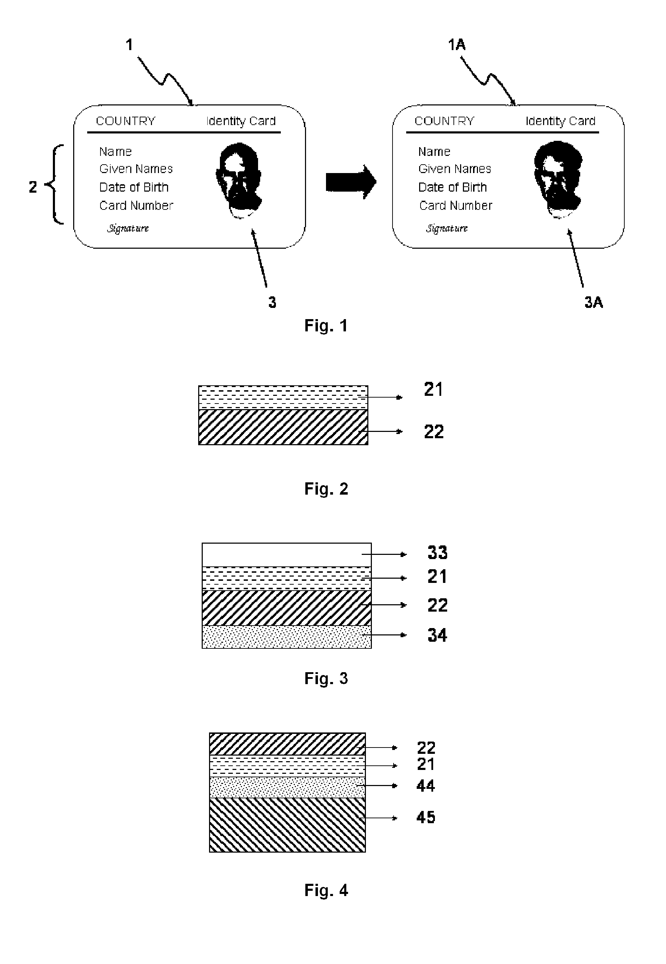

The imaging techniques can be categorized into "additive" imaging techniques, e.g. inkjet, and "subtractive" imaging techniques, e.g. laser engraving. Often in falsifying security cards, the addition of information has been proven to be easier than the subtraction of information using particular chemicals. For example, it is possible to completely change a photograph by adding more hair, a moustache, glasses etc as shown in Fig.1. Many approaches have been developed to hinder or prevent such falsification.

One approach involves a change of the information content on the security document. For example, WO 2008/084315 (AXALTO) discloses a secure identification document comprising a first set of identification data and a second set of identification data obtained by duplicating the first set of identification data, which takes the form of a reverse image of the first set of identification data. A disadvantage of including an image and its reverse image is the reduction of space available for other type of information.

Another approach involves the addition of security features such as, for example, a watermark as US 7097899 (AGFA) or the use of a lenticular lens in US 2003183695 (DIGIMARC) ). Generally, the addition of such security features represents an increase in the cost of manufacturing security documents. It often also requires installing at the customer site costly and sophisticated equipment, e.g. including a coating device, needed to assemble the security documents.

Since methods for falsification and counterfeiting of security documents also continue to develop and improve, it remains a constant battle to protect security documents against falsification and counterfeiting. Therefore a need exists to provide simple and cost-effective methods for securing documents.

### Disclosure of Invention

### Summary of the Invention

In order to overcome the problems described above, preferred embodiments of the present invention provide a security document precursor as defined by **Claim 1.**

It is a further object of the present invention to provide a method of manufacturing security documents which are both simple and cost-effective to implement, yet provides security documents which are difficult to falsify.

The invention makes use of a thermal energy reciprocity failure on the image tone of an image in a security document to hinder or prevent falsification of that security document. Thermal energy reciprocity is the relationship between the heating temperature and the duration of heating for obtaining an image property, e.g. optical density or image tone. When no thermal energy reciprocity failure exists, an identical image property is obtained. For example, heating at a high temperature for a short time or heating at a lower temperature for a longer time then both gives the same optical density or image tone.

In the present invention a neutral black or grey image tone can be obtained in the thermosensitive layer by a millisecond exposure using a thermal print head. A different image tone, such as a red image tone, is obtained when the neutral black or grey areas are reheated by an infrared laser for an exposure time of less than a microsecond in attempting falsification through addition of information in the laser markable layer.

Further advantages and embodiments of the present invention will become apparent from the following description.

### Brief Description of Figures in the Drawings

Fig.1 shows an example of photograph forgery by adding darkened areas on a security card. The original security card 1 contains data about the identity of the holder in a text area 2 and a laser marked image 3. The original image 3 of the security card 1 has been modified by the addition of hair and a moustache through laser marking, so that there is a new forged image 3A on the security card 1A.

Fig.2 shows a security laminate having a thermosensitive layer 22 on a support 21.

Fig.3 shows a security laminate having a support 21, a laser markable layer 34, a thermosensitive layer 22 and a protective layer 33.

Fig.4 shows a security laminate having a support 21 and a thermosensitive layer 22 laminated onto a laser markable layer 44 on a card support 45.

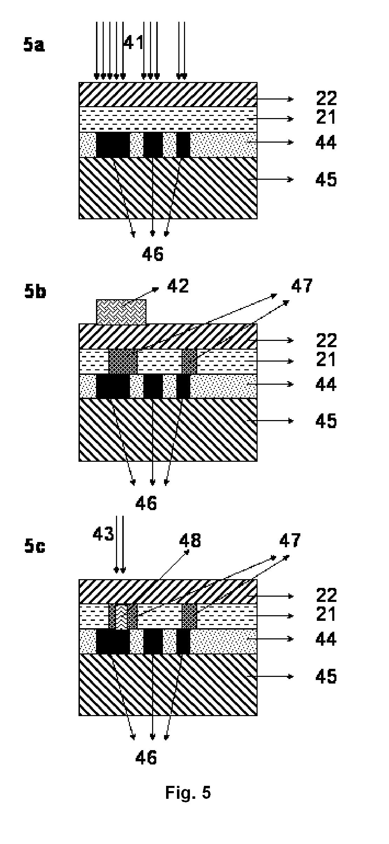

Fig.5 shows the different steps of the imaging process and an attempted falsification on the card structure of Fig.4. In Fig.5a, a first image 46 has been made in the laser markable layer 44 by laser light 41. In Fig.5b, a second image 47 has been made in the thermosensitive layer 21 by a thermal head 42. In Fig.5c, a falsification attempt by writing additional information with laser light 43 in the laser markable layer 44 results in a discoloration of the second image 47 in the thermosensitive layer.

### Definitions

The definitions of security features correspond with the normal definition as adhered to in the "Glossary of Security Documents - Security features and other related technical terms" as published by the Consilium of the Council of the European Union on August 25, 2008 (Version: v.10329.02.b.en) on its website: http://www.consilium.europa.eu/prado/EN/glossaryPopup.html.

The terms "image" as used in the preferred embodiments of the present invention, encompasses all types of information such as drawings, photos, patterns, barcodes and textual information

The term "alkyl" means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl etc.

"Substantially light-insensitive" means not intentionally light sensitive.

"PET" is an abbreviation for polyethylene terephthalate.

"PETC" is an abbreviation for crystalline PET, i.e. biaxially stretched polyethylene terephthalate.

"PETG" is an abbreviation for polyethylene terephthalate glycol, the glycol indicating glycol modifiers which are incorporated to minimize brittleness and premature aging that occur if unmodified amorphous polyethylene terephthalate (APET) is used in the production of cards.

### Security Laminates

A security laminate according to the present invention comprises:
a) a biaxially stretched polyethylene terephthalate support; and
b) a thermosensitive layer coated on the support;
wherein the thermosensitive layer contains a binder, a substantially light-insensitive organic silver salt, an organic reducing agent and a toning agent selected from the group consisting of phthalimides, phthalazinones, benzoxazine diones and naphthoxazine diones.

A security document according to the present invention includes a security laminate as defined in the previous paragraph.

The security document may be a "smart card", meaning an identification card incorporating an integrated circuit as a so-called electronic chip. The electronic chip may be of the contact less type, e.g. a RFID-chip.

The security document according to the present invention is preferably an identification card selected from the group consisting of an identity card, a security card, a driver's licence card, a social security card, a membership card, a time registration card, a bank card, a pay card and a credit card. In a preferred embodiment, the security document according to the present invention is a personal identity card.

A large set of security cards is preferably prepared on a large carrier of information such as a web or sheet by a step and repeat process, after which the information carrier is cut into multiple items with the appropriate dimensions each representing a personal ID card, preferably according to the format specified by ISO/IEC 7810. ISO 7810 specifies three formats for identification cards: ID-1 with the dimensions 85.60 mm x 53.98 mm, a thickness of 0.76 mm is specified in ISO 7813, as used for bank cards, credit cards, driving licences and smart cards; ID-2 with the dimensions 105 mm x 74 mm, as used in German identity cards, with typically a thickness of 0.76 mm; and ID-3 with the dimensions 125 mm x 88 mm, as used for passports and visa's. When the security cards include one or more contact less integrated circuits then a larger thickness is tolerated, e.g. 3 mm according to ISO 14443-1.

### Methods of Manufacturing Security Documents

A method of manufacturing a security document according to the present invention includes the steps of:
a) providing a security laminate as defined above;
b) providing a security document containing a laser markable element;
c) laminating the security laminate on the security document.

In one embodiment, the security laminate is laminated on the security document with the thermosensitive layer oriented towards the lasermarkable layer.

In another embodiment, the security laminate is laminated on the security document with the thermosensitive layer oriented away from the lasermarkable layer. In the latter, on top of the thermosensitive layer of the security document preferably a protective layer is provided.

An extra layer, e.g. present on the lasermarkable layer of the security document may be used to enhance the adhesion between the security laminate and the security document. Such a layer may also be a hot melt foil which is positioned between the security laminate and the security document just prior to lamination. A preferred hot melt foil is a polyurethane foil;

A hot lamination technique may be used as long as the lamination temperature is below the temperature creating optical density in the thermosensitive layer. Alternatively a cold lamination technique may be used.

In a preferred embodiment of the method of manufacturing a security document precursor according to the present invention, in order, a first image is laser marked in the laser markable element and a second image is added to the thermosensitive layer by a thermal developing means. In a more preferred embodiment, the thermal developing means is a thermal print head. Instead of a thermal head, a hot stamp can be used. A thermal head has the advantage over a hot stamp that variable data can be printed.

In a preferred embodiment of the method of manufacturing a security document according to the present invention, an image is split up into a first image for the laser markable layer and a second image for the thermosensitive layer,
wherein the larger optical densities of an image are lasered as the first image and the smaller optical densities of an image are applied by the thermal print head as the second image.

It is possible to limit the optical density obtainable with the thermosensitive layer by controlling the amount of the substantially light-insensitive organic silver salt in the layer. A smaller amount of the substantially light-insensitive organic silver salt in the layer leads to a lower amount of developed silver and thus also a lower optical density.

In a preferred embodiment the optical density measured in reflection using a spectrodensitometer Type 504 from X-RITE using a visual filter is limited to about 1.0, more preferably 0.8. This has the advantage that a security card falsifier cannot obtain an optical density of e.g. 2.0 by the thermosensitive layer alone, but needs additional optical density delivered by the laser markable layer. However, the additional optical density in the laser markable layer leads to an image tone differing from neutral black in the thermosensitive layer, making it immediately visible that the security document has been tampered with.

### Supports

The support of the security laminate is a PETC support, i.e. a biaxially stretched polyethylene terephthalate.

The support of the security laminate according to the present invention should be sufficiently thick to be self-supporting, but thin enough to be flexed, folded or creased without cracking. Preferably, support has a thickness of between about 6 µm and about 250 µm, more preferably between about 10 µm and about 150 µm, most preferably between about 20 µm and about 100 µm.

A polyethylene terephthalate support has excellent properties of dimensional stability and is resistant to many organic solvents, unlike for example polycarbonate usually employed as a support in a security document. By laminating the security laminate on a polycarbonate based card with the PETC support as the outermost layer, the physical properties of the security document are enhanced.

The support includes preferably a subbing layer whereon the thermosensitive layer is coated. This has the advantage that the adhesion between the thermosensitive layer and the support is improved. Useful subbing layers for this purpose are well known in the photographic art and include, for example, polymers of vinylidene chloride such as vinylidene chloride/acrylonitrile/acrylic acid terpolymers or vinylidene chloride/methyl acrylate/itaconic acid terpolymers

### Laser Markable Layers

Laser marking produces a colour change in a laser markable layer through carbonization of the polymer in the layer caused by local heating. Patent literature and other literature contain contradictory statements regarding the necessity of specific "laser additives" for one polymer or another. This is presumably because particular additives which are regularly added to plastics for other purposes (for example as a filler, for colouring or for flame retardation) can also promote the laser marking result. The literature particularly frequently mentions polycarbonate, polybutylene terephthalate (PBT) and Acrylonitrile Butadiene Styrene (ABS) as "laser-markable even without additive", but additives are often added even in the case of these polymers in order to improve the laser markability further.

The laser markable layer can be present as a self-supporting layer or as a layer on a support.

In a preferred embodiment of the security document according to the present invention, the self-supporting layer contains polyvinyl chloride, polycarbonate or polyester, with coloured or whitened polyvinyl chloride, polycarbonate or polyester being preferred.

### Polymers for Laser Marking

Any polymer suitable for laser marking, i.e. carbonization, may be used in the security document according to the present invention. Preferred polymers include polycarbonate (PC), polyethylene terephthalate (PET), polybutylene terephthalate (PBT), polyvinyl chloride (PVC), polystyrene (PS) and copolymers thereof, such as e.g. aromatic polyester-carbonate and acrylonitrile butadiene styrene (ABS). A mixture of two or more of these polymers may also be used.

In a preferred embodiment of the security document according to the present invention, the laser markable layer contains polycarbonate or a copolymer thereof.

### Laser additives

In order to promote and to support the colour change in polymeric materials, various additives have been developed. As a result of the addition of a "laser additive", a substance which absorbs the laser light and converts it to heat, the heat input and the carbonization can be improved. This is the case even for polymers such as polycarbonate which carbonize readily on their own. Laser-markable plastics which are difficult to laser-treat include polyethylene, polypropylene, polyamide, polyoxymethylene, polyester, polymethyl methacrylate, polyurethane or a copolymer thereof.

Suitable laser additives include antimony metal, antimony oxide, carbon black, mica (sheet silicate) coated with metal oxides and tin-antimony mixed oxides. In WO 2006/042714 (TICONA) , the dark coloration of plastics is obtained by the use of additives based on various phosphorus-containing mixed oxides of iron, copper, tin and/or antimony.

In a preferred embodiment, the laser marked security document precursor contains carbon black particles. This avoids the use of heavy metals, which are less desirable from an ecology point of view, in manufacturing these security documents, but may also cause problems for persons having a contact allergy based on heavy metals.

Suitable carbon blacks include Pigment Black 7 (e.g. Carbon Black MA8^{™} from MITSUBISHI CHEMICAL), Regal^{™} 400R, Mogul^{™} L, Elftex^{™} 320 from CABOT Co., or Carbon Black FW18, Special Black 250, Special Black 350, Special Black 550, Printex^{™} 25, Printex^{™} 35, Printex^{™} 55, Printex^{™} 90, Printex^{™} 150T from DEGUSSA.

The use of these laser additives may lead to an undesired background colouring of the security document. For example, a too high concentration of carbon black in a laser markable layer based on polycarbonate leads to grey security documents. If a white background is requested for the security document, then a white pigment may be added to the composition for manufacturing the laser markable layer. Preferably a white pigment with a refractive index greater than 1.60 is used. A preferred pigment is titanium dioxide.

### Polymeric Overlays

The security document precursor according to the present invention preferably has at least one polymer overlay on top of the laser markable layer. The security document precursor may have several polymeric overlays on top of each other, for example, each containing some security features or information applied by imaging techniques such as ink-jet printing, intaglio printing, screen printing, flexographic printing, driographic printing, electrophotographic printing, electrographic printing, embossing and offset printing.

In one embodiment of the security document precursor according to the present invention, the at least one polymer overlay is sealed to the laser markable layer.

Suitable polymeric overlays which are laminated or coated include cellulose acetate propionate or cellulose acetate butyrate, polyesters such as polyethylene terephthalate and polyethylene naphthalate, polyamides, polycarbonates, polyimides, polyolefins, poly(vinylacetals), polyethers and polysulphonamides.

In a preferred embodiment of the security document precursor according to the present invention, the polymeric overlay is polyvinyl chloride, polycarbonate or polyester. The polyester is preferably polyethylene terephthalate (PET) or polyethylene terephthalate glycol (PETG).

### Thermosensitive Layers

The thermosensitive layer preferably contains one or more substantially light-insensitive organic silver salts, one or more reducing agents therefore in thermal working relationship therewith and a binder.

The security document precursor may comprise a layer system in which the above-mentioned ingredients may be dispersed in different layers, with the proviso that the substantially light-insensitive organic silver salts are in reactive association with the reducing agents, i.e. during the thermal development process the reducing agent must be present in such a way that it is able to diffuse to the particles of substantially light-insensitive organic silver salt so that reduction to silver can occur. Such materials include the possibility of one or more substantially light-insensitive organic silver salts and/or one of more organic reducing agents therefore being encapsulated in heat-responsive microcapsules, such as disclosed in EP 736799 A (FUJI) herein incorporated by reference.

The thermosensitive layer is preferably applied by a method which does not invoke a substantial discoloration such as coating techniques, printing techniques and cold lamination techniques.

The coating of the thermosensitive layer may proceed by any coating technique e.g. such as described in Modern Coating and Drying Technology, edited by Edward D. Cohen and Edgar B. Gutoff, (1992) VCH Publishers Inc., 220 East 23rd Street, Suite 909 New York, NY 10010, USA. Coating may proceed from aqueous or solvent media with overcoating of dried, partially dried or undried layers.

Suitable printing techniques include ink-jet printing, intaglio printing, screen printing, flexographic printing and offset printing.

In the world of manufacturing security documents, hot lamination is the most common lamination method and is generally preferred over cold lamination. Hot laminators use a heat-activated adhesive that is heated as it passes through the laminator. The downside to hot laminators is that the thermosensitive layer may not be capable to handle the heat required to apply the lamination. Cold laminators use a pressure-sensitive adhesive that does not need to be heated. The laminator uses rollers that push the sheets of lamination together. Cold laminators are faster and easier to use than hot laminators, and do not cause discoloration of the thermosensitive layer.

### Organic Silver Salts

The security document precursor preferably includes a substantially light-insensitive silver salt of an organic carboxylic acid.

The security document precursor preferably includes a substantially light-insensitive organic silver salt selected from the group consisting of silver laurate, silver palmitate, silver stearate, silver hydroxystearate, silver oleate and silver behenate and mixtures thereof.

Other silver salts of an organic carboxylic acid as described in GB 1439478 (AGFA) , e.g. silver benzoate, may also be used to produce a thermally developable silver image. Combinations of different silver salts of an organic carboxylic acid may also be used in the present invention, as disclosed in EP 964300 A (AGFA) .

Organic silver salts may be dispersed by standard dispersion techniques. Ball mills, bead mills, microfluidizers, ultrasonic apparatuses, rotor stator mixers etc. have been found to be useful in this regard. Mixtures of organic silver salt dispersions produced by different techniques may also be used to obtain the desired thermographic properties e.g. of coarser and more finely ground dispersions of organic silver salts.

### Reducing agents

The reducing agent for the thermosensitive layer of the security document precursor according to the present invention may be an organic compound containing at least one active hydrogen atom linked to O, N or C, such as is the case with, aromatic di- and tri-hydroxy compounds. 1,2-dihydroxy-benzene derivatives, such as catechol, 3-(3,4-dihydroxyphenyl) propionic acid, 1,2-dihydroxybenzoic acid, gallic acid and esters e.g. methyl gallate, ethyl gallate, propyl gallate, tannic acid, and 3,4-dihydroxy-benzoic acid esters are preferred, with those described in EP 692733 A (AGFA) and EP 903625 A (AGFA) being particularly preferred.

Combinations of reducing agents may also be used that on heating become reactive partners in the reduction of the one or more substantially light-insensitive organic silver salt. For example, combinations of sterically hindered phenols with sulfonyl hydrazide reducing agents such as disclosed in US 5464738 (3M) ; trityl hydrazides and formyl-phenyl-hydrazides such as disclosed in US 5496695 (3M) ; trityl hydrazides and formyl-phenyl-hydrazides with diverse auxiliary reducing agents as disclosed in US 5545505 (3M) , US 5545507 (3M) and US 5558983 (3M) ; acrylonitrile compounds as disclosed in US 5545515 (3M) and US 5635339 (3M) ; and 2-substituted malonodialdehyde compounds as disclosed in US 5654130 (3M) .

### Binders

The film-forming binder of the thermosensitive layer may be all kinds of natural, modified natural or synthetic resins or mixtures of such resins, in which the at least one organic silver salt can be dispersed homogeneously either in aqueous or solvent media: e.g. cellulose derivatives, starch ethers, galactomannan, polymers derived from α,β-ethylenically unsaturated compounds such as polyvinyl chloride, after-chlorinated polyvinyl chloride, copolymers of vinyl chloride and vinylidene chloride, copolymers of vinyl chloride and vinyl acetate, polyvinyl acetate and partially hydrolyzed polyvinyl acetate, polyvinyl alcohol, polyvinyl acetals that are made from polyvinyl alcohol as starting material in which only a part of the repeating vinyl alcohol units may have reacted with an aldehyde, preferably polyvinyl butyral, copolymers of acrylonitrile and acrylamide, polyacrylates, polymethacrylates, polystyrene and polyethylene or mixtures thereof.

Suitable water-soluble film-forming binders for use in security document precursors according to the present invention are: polyvinyl alcohol, polyacrylamide, polymethacrylamide, polyacrylic acid, polymethacrylic acid, polyvinylpyrrolidone, polyethyleneglycol, proteinaceous binders, polysaccharides and water-soluble cellulose derivatives. A preferred water-soluble binder for use in the thermosensitive layer of the present invention is gelatine.

The binder to organic silver salt weight ratio is preferably in the range of 0.2 to 7, and the thickness of the thermosensitive layer is preferably in the range of 5 to 50 mm. Binders are preferred which do not contain additives, such as certain antioxidants (e.g. 2,6-di-tert-butyl-4-methylphenol), or impurities which adversely affect the thermographic properties of the thermosensitive layer in which they are used.

### Toning Agents

The thermosensitive layer of the security document precursor according to the present invention includes one or more toning agents, which enables a neutral black image tone to be obtained in the higher densities and neutral grey in the lower densities.

The toning agent is preferably selected from the group consisting of phthalimides, phthalazinones, benzoxazine diones and naphthoxazine diones e.g. phthalimides and phthalazinones within the scope of the general formulae described in US 4082901 (AGFA) ; the toning agents described in US 3074809 (3M) , US 3446648 (3M) and US 3844797 (AGFA) ; and the heterocyclic toner compounds of the benzoxazine dione or naphthoxazine dione type as disclosed in GB 1439478 (AGFA) , US 3951660 (AGFA) and US 5599647 (AGFA) , herein incorporated by reference.

In a preferred of the security document precursor according to the present invention, the thermosensitive layer includes one or more toning agents selected from the group consisting of phthalazinone, benzo[e][1,3]oxazine-2,4-dione, 7-methyl-benzo[e][1,3]oxazine-2,4-dione, 7-methoxy-benzo[e][1,3]oxazine-2,4-dione and 7-(ethylcarbonato)-benzo[e][1,3]oxazine-2,4-dione.

### Stabilizer

The thermographic sensitive layer may further include a stabilizer to obtain improve shelf-life and reduced fogging.

In a preferred embodiment of the security document precursor according to the present invention, the thermosensitive layer includes one or more stabilizers selected from the group consisting of benzotriazole, substituted benzotriazoles and aromatic polycarboxylic acid such as ortho-phthalic acid, 3-nitro-phthalic acid, tetrachlorophthalic acid, mellitic acid, pyromellitic acid and trimellitic acid and anhydrides thereof.

### Infrared Absorbing Compounds

The thermosensitive layer of the security document precursor according to the present invention may also contain one or more infrared absorbing compound which is image wise present in the thermosensitive layer according to a security image, e.g. guilloches.

When producing the first image in the laser markable layer, the infrared absorbing compound in the thermosensitive layer will thermosensitive layer reduce the infrared light transmission, leading to a smaller optical density in the corresponding areas of the laser markable layer. Depending on the selection of the reducing agent, toning agent and stabilizer, the security pattern can be created in a different image tone than the image tone of a thermally developed area in thermosensitive layer using a thermal printing head.

In one embodiment, the infrared radiation absorbing compound reduces the infrared light transmission at a wavelength between 750 and 1400 nm to no more than 90%., more preferably no more than 75% and most preferably no more than 50%.

The infrared radiation absorbing compounds may be pigments such as e.g. carbon black but are preferably dyes, hereinafter referred to as IR-dye, such as cyanine, merocyanine, indoaniline, oxonol, pyrilium and squarilium dyes.

The advantage of using IR-dyes that, unlike carbon black, a high absorbance in the infrared region can be combined with a low absorbance in the visible region, thereby avoiding undesired background colouring of the security document.

The interposed layer has preferably an IR absorbance of at least 0.1, more preferably of at least 0.3 within the range of 750-1400 nm and an optical density of less than 0.03 in the visible region (400 - 700 nm).

A combination of one or more infrared radiation absorbing compounds, more specifically IR-dyes, may also be used. A disadvantage of an IR-dye is that the absorbance in the IR-region usually contains one or more peaks and does represent not a "block"-like absorbance. By combining one or more IR-dyes a "block"-like absorbance can be obtained which is effective in reducing the infrared light transmission of the interposed layer for different laser wavelengths.

### Other Additives

The thermosensitive layer of the security document precursor according to the present invention may include other additives such as surfactants, colorants, dispersants, phosphorescent compounds, polymers, antistatic agents, ultraviolet light absorbing compounds, optical brightening agents and the like.

Surfactants and dispersants aid the dispersion of ingredients which are insoluble in the particular dispersion medium. The one or more surfactants may be anionic, nonionic or cationic surfactants.

Suitable dispersants are natural polymeric substances, synthetic polymeric substances and finely divided powders, e.g. finely divided non-metallic inorganic powders such as silica.

### Protective Layers

On top of the thermosensitive layer of the security laminate according to the present invention a protective layer may be provided. In general this protects the thermosensitive element from finger prints, atmospheric humidity and from surface damage by scratching etc. It also prevents direct contact of print heads or heat sources with the thermosensitive layer when the security laminate is laminated on the security document with the thermosensitive layer oriented away from the lasermarkable layer.

Protective layers for thermosensitive layers which come into contact with and have to be transported past a heat source under pressure, have to exhibit resistance to local deformation and good slipping characteristics during transport past the heat source during heating.

### Slipping Layers

A slipping layer, being the outermost layer, may comprise a dissolved lubricating material and/or particulate material, e.g. talc particles, optionally protruding from the outermost layer. Examples of suitable lubricating materials are a surface active agent, a liquid lubricant, a solid lubricant or mixtures thereof, with or without a polymeric binder. Such a slipping layer may also be present in the security laminate on the opposite side, i.e. the backside, of the support carrying the thermosensitive layer.

### Methods of producing security document

Usually to prevent forgeries of identification documents, different means of securing are used, e.g. guilloches and holograms. These solutions make it possible to secure documents adequately, but they require additional equipment and/or material, leading to higher production costs. The method of producing a security document according to the present invention allows the securization of a security document which is simple to implement and makes it possible to reduce production costs.

### Laser Marking

Laser marking in the present invention involves the carbonization of material from a laser markable layer.

The laser used in the laser marking can be any laser as long as it is able to form a pattern by carbonization of the material in the laser markable layer. In order to carry out the laser marking with high speed, a laser having a high power is desirable. A preferred example of such a has an emitting wavelength in an infrared region or near infrared region, for example, a carbon dioxide gas laser, a YAG laser, a semiconductor laser or a fiber laser. Also, an ultraviolet laser having an emitting wavelength in an ultraviolet region, for example, an excimer laser, a YAG laser wavelength-converted to the third harmonic or the fourth harmonic or a copper vapour laser is also able to conduct ablation processing which cleaves a bond between molecules of organic compound and thus is suitable for micro fabrication. A laser having an extremely high peak power, for example, a femtosecond laser can also be employed. The laser irradiation may be performed continuously or pulse wise.

Preferred lasers for laser engraving in the present invention are CO₂-lasers and Nd-YAG lasers. Fiber lasers can also be used.

Although the laser marking is conducted under oxygen-containing gas, ordinarily in the presence of air or in airflow, it can be conducted under carbon dioxide gas or nitrogen gas.

### Thermal Developing Means

The image formation in the thermosensitive layer is carried out by the image-wise application of heat either in analogue fashion by direct exposure through an image, e.g. a hot stamp, or by reflection from an image, or in digital fashion pixel by pixel e.g. by direct thermal imaging with a thermal head.

In thermal printing image signals are converted into electric pulses and then through a driver circuit selectively transferred to a thermal print head. The thermal print head consists of microscopic heat resistor elements, which convert the electrical energy into heat via Joule effect. The operating temperature of common thermal print heads is in the range of 300 to 400°C and the heating time per picture element (pixel) may be less than 1.0ms, the pressure contact of the thermal print head with the recording material being e.g. 200-1000g/linear cm, i.e. with a contact zone (nip) of 200 to 300 mm a pressure of 5000 to 50,000 g/cm², to ensure a good transfer of heat.

Activation of the heating elements can be power-modulated or pulse-length modulated at constant power. EP 654355 A (AGFA) discloses a method for making an image by image-wise heating by means of a thermal head having energizable heating elements, wherein the activation of the heating elements is executed duty cycled pulse wise. EP 622217 A (AGFA) discloses a method for making an image using a direct thermal imaging element producing improvements in continuous tone reproduction.

### Other security features

To prevent forgeries of identification documents, different means of securing are used. One solution consists in superimposing lines or guilloches on an identification picture such as a photograph. In that way, if any material is printed subsequently, the guilloches appear in white on added black background. Other solutions consist in adding security elements such as information printed with ink that reacts to ultraviolet radiation, micro-letters concealed in an image or text etc.

The security document according to the present invention may contain other security features such as anti-copy patterns, guilloches, endless text, miniprint, microprint, nanoprint, rainbow colouring, 1D-barcode, 2D-barcode, coloured fibres, fluorescent fibres and planchettes, fluorescent pigments, OVD and DOVID (such as holograms, 2D and 3D holograms, kinegrams^{™}, overprint, relief embossing, perforations, metallic pigments, magnetic material, Metamora colours, microchips, RFID chips, images made with OVI (Optically Variable Ink) such as iridescent and photochromic ink, images made with thermochromic ink, phosphorescent pigments and dyes, watermarks including duotone and multitone watermarks, ghost images and security threads.

A combination with one of the above security features increases the difficulty for falsifying a security document.

### EXAMPLES

### Materials

All materials used in the following examples were readily available from standard sources such as ALDRICH CHEMICAL CO. (Belgium) and ACROS (Belgium) unless otherwise specified.

**KIESELSOL**^{™} **100F** is a 36% aqueous dispersion of colloidal silica available from BAYER.
**Mersolat^{™} H** is 76% aqueous paste of a sodium pentadecylsulfonate from BAYER.
**Kelzan**^{™} **S** is a xanthan gum from MERCK & CO., Kelco Division, USA, which according to Technical Bulletin DB-19 is a polysaccharide containing mannose, glucose and glucuronic repeating units as a mixed potassium, sodium and calcium salt.
**Zonyl**^{™} **FSO100** is a fluorosurfactant, more specific a block copolymer of polyethyleneglycol and polytetrafluoroethylene with the structure: F(CF₂CF₂)_{y}CH₂CH₂O(CH₂CH₂O)ₓH, where x=0 to ca. 15 and y=1 to ca. 7 from DUPONT.
**Poligen**^{™} **WE7** is a 40% aqueous latex of oxidized polyethylene from BASF.
**Liofol**^{™} **UK 3640 /Liofol**^{™} **hardener 6800** is a 2-component polyurethane adhesive from HENKEL.
**PEC**^{™} is a symmetrical coextrudate supplied by FOLIENWERK WOLFEN GMBH, in which a core of polycarbonate is sandwiched between PETG-films.
**PETG-OP** is an opaque 100 µm PETG (using titanium dioxide as pigment) available from FOLIENWERK WOLFEN GMBH.
**PEDOT/PSS** is a 1.2% aqueous dispersion of poly(3,4-ethylene-oxythiophene)/poly(styrene sulphonic acid) (1:2.46 by weight) produced as described in US 5354613 (AGFA) ).
**AgB** is silver behenate.
**BLHP** is S-LEC^{™} BL5HP, a polyvinyl butyral from SEKISUI.
**Oil** is BAYSILON^{™}, a silicone oil from BAYER.
**RO1** is the reducing agent 3,4-dihydroxybenzonitrile.
**RO2** is the reducing agent 3,4-dihydroxybenzophenone.
**TO1** is 7-(ethylcarbonato)-benzo[e][1,3]oxazine-2,4-dione, used as a toning agent.
**T02** is 7-methyl-benzo[e][1,3]oxazine-2,4-dione, used as a toning agent.
**SO1** is glutaric acid, used as a stabilizer.
**SO2** is tetrachlorophthalic acid anhydride, used as a stabilizer.
**SO3** is benzotriazole, used as a stabilizer.
**ERCOL**^{™} **4820** is a polyvinylalcohol from ACETEX EUROPE. **LEVASIL**^{™} **VP AC 4055** is a 15% aqueous dispersion of colloidal silica with acid groups predominantly neutralized with sodium ions and a specific surface are of 500 m²/g, from BAYER AG has been converted into the ammonium salt. **ULTRAVON**^{™} **W** is 75-85% concentrate of a sodium arylsulfonate from CIBA GEIGY converted into acid form by passing through an ion exchange column.
**SYLOID**^{™} **72** is a silica from GRACE.
**SERVOXYL**^{™} **VPDZ 3/100** is a mono[isotridecyl polyglycolether (3 EO)] phosphate, from SERVO DELDEN B.V.
**SERVOXYL**^{™} **VPAZ 100** is a mixture of monolauryl and dilauryl phosphate, from SERVO DELDEN B.V.
**MICROACE TALC P3** is Indian talc from NIPPON TALC.
**RILANIT**^{™} **GMS** is a glycerine monotallow acid ester, from HENKEL AG.
**TMOS** is tetramethylorthosilicate hydrolyzed in the presence of methanesulfonic acid.
**Makrofol**^{™} **DE 1-4** is a translucent extrusion film based on Makrolon^{™} (polycarbonate) from BAYER.
**Makrofol**^{™} **DE 1-1** is a transparent extrusion film based on Makrolon^{™} (polycarbonate) from BAYER.
**Makrofol**^{™} **ID 4-4 white** is an opaque extrusion film based on Makrolon^{™} from BAYER.
**Scapa**^{™} **Thermofoil G160** is a heat reactive adhesive transfer thermoplastic polyurethane consisting of a 20µm thick clear PU resin supplied on a 130 g/m² white Kraft paper release liner, available from SCAPA Group Plc.

### EXAMPLE 1

This example illustrates the manufacturing of a security laminate according to the present invention and an attempt to falsify it.

### Preparation of a security laminate SL-1

In a first step a security laminate SL-1 is prepared having a support and a laser markable layer.

A 63 µm PETC was provided on one side with a subbing layer S-1 and on the other side with a subbing layer S-2 and as a second layer an adhesive layer A-1. An adhesive layer A-2 of Liofol^{™} UK 3640 /Liofol^{™} hardener 6800 was then coated on the adhesive layer A-1 to deliver the laminate LPET-1.

Subbing layer S-1 :

**Table 1**

| **Components of Subbing layer S-1** | **mg/m²** |
|---|---|
| copolymer of vinylidene chloride, methyl acrylate | 467.0 |
| and itaconic acid (88:10:2 by weight) | |
| colloidal silica (KIESELSOL^{™} 100F) | 121.0 |
| Mersolat^{™} H | 0.9 |
| **Coating thickness** | 0.60 µm |

Subbing layer S-2:

**Table 2**

| **Components of Subbing layer S-2** | **mg/m²** |
|---|---|
| copolymer of vinylidene chloride, methyl acrylate | 147.3 |
| and itaconic acid (88:10:2 by weight) | |
| poly(3,4-ethylenedioxythiophene)/PSS | 2.6 |
| colloidal silica (KIESELSOL^{™} 100F) | 16.4 |
| Mersolat^{™} H | 0.7 |
| **Coating thickness** | 0.17 µm |

Adhesive layer A-1 :

**Table 3**

| **Components of Adhesive layer A-1** | **mg/m²** |
|---|---|
| Kelzan^{™} S | 10.0 |
| poly(3,4-ethylenedioxythiophene)/PSS | 12.1 |
| colloidal silica (KIESELSOL^{™} 100F) | 20.0 |
| Zonyl^{™} FSO100 | 21.0 |
| Poligen WE7 | 2.0 |
| 0.1 µm diameter polymethylmethacrylate | 200.0 |
| particles | |
| **Coating thickness** | 0.28 µm |

A PEC-foil was then laminated on the laminate LPET-1 using a roll laminator at room temperature and delivered the laminate LPET-2.

The other side of the PEC was laminated against a 100 µm PETG-OP foil to complete the security laminate SL-1.

### Coating of Thermosensitive Layer and Protective Layer

On the PETC-side of the security laminate SL-1, two consequent coatings were applied.

First, a thermosensitive layer T-1 was coated on the PETC-side from MEK giving a composition according to Table 4 after drying at 50°C for 1h in a drying cupboard.

**Table 4**

| **Components** | **Amount of the component** | |
|---|---|---|
| AgB | 3.89 | g/m² |
| BL5HP | 15.12 | g/m² |
| R01 | 50 | mol% vs AgB |
| R02 | 30 | mol% vs AgB |
| T01 | 5 | mol% vs AgB |
| T02 | 10 | mol% vs AgB |
| S01 | 22 | mol% vs AgB |
| S02 | 5 | mol% vs AgB |
| S03 | 10 | mol% vs AgB |
| Oil | 0.04 | g/m² |

The thermosensitive layer T-1 was then coated with a protective layer P-1 using an aqueous composition, containing the components according to Table 5 and adjusted to a pH of 3.8 with 1N nitric acid, to a wet layer thickness of 85 µm and then dried at 50°C for 15 minutes to produce the protective layer P-1 having the composition of Table 5.

**Table 5**

| **Components of protective layer P-1** | **g/m²** |
|---|---|
| ERCOL™ 4820 | 2.100 |
| LEVASIL™ VP AC 4055 | 1.050 |
| ULTRAVON™ W | 0.075 |
| SYLOID™ 72 | 0.090 |
| SERVOXYL™ VPDZ 3/100 | 0.075 |
| SERVOXYL™ VPAZ 100 | 0.075 |
| MICROACE TALC P3 | 0.045 |
| RILANIT™ GMS | 0.150 |
| TMOS | 0.870 |

After drying, the security laminate SL-1 coated with the thermosensitive layer T-1 and the protective layer P-1 was kept at 50°C during 5 days to permit the cross-linking of the protective layer and resulting in a security laminate SL-2.

### Evaluation of Security Laminate SL-2

The security laminate SL-2 was laser marked with a first image containing six squares (9 x 9 mm) of grey levels using a Rofin RSM Powerline E laser (10 W) with settings 29 ampere and 22 kHz. The lasering through the thermosensitive layer created an image in the laser markable PEC-foil but did not induce visual changes in the thermosensitive layer.

A second image of microtext partially overlapping with the first image was applied to the thermosensitive layer by printing with a Drystar^{™} 2000 thermographic printer from AGFA HEALTHCARE. This printing step only caused the thermosensitive layer to exhibit a neutral black image tone while no change was observed in the laser markable layer.

Then, as a simulation of falsification, the security document was again exposed to laser light (same conditions as above) in an effort to add optical density in the laser markable layer. In the areas of the second image the laser caused a red discoloration of the neutral black image in the thermosensitive layer in combination with ablation of the protective layer, thereby creating a relief on the surface of the document. Thus an effort to alter an image can be easily detected at visual inspection of the card.

### EXAMPLE 2

This example illustrates the lamination of a security laminate according to the present invention on a polycarbonate card, wherein the polyethylene terephthalate support of the security laminate serves as an outermost protective layer.

### Preparation of a Security Laminate SL-3

The thermosensitive layer T-2 according to Table 6 was coated with a bar coater at a thickness of 50 µm on a 6 µm PETC substrate and dried for 15 minutes at 80°C in an oven with air circulation to deliver the security laminate SL-3.

**Table 6**

| **Components** | **Amount of the component** | |
|---|---|---|
| AgB | 1.95 | g/m² |
| BL5HP | 7.60 | g/m² |
| R01 | 50 | mol% vs AgB |
| R02 | 30 | mol% vs AgB |
| T01 | 5 | mol% vs AgB |
| T02 | 10 | mol% vs AgB |
| S01 | 22 | mol% vs AgB |
| S02 | 5 | mol% vs AgB |
| S03 | 10 | mol% vs AgB |
| Oil | 0.02 | g/m² |

A self-laminated polycarbonate identity card ID-A with an ID-1 format as defined in ISO 7810 was produced with a configuration according to Table 7.

**Table 7**

| |
|---|
| 125 µm transparent Makrofol^{™} DE 1-1 (non-laser markable) |
| 50 µm transparent Makrofol^{™} DE 1-4 (laser markable) |
| 250 µm opaque Makrofol^{™} ID 4-4 white |
| 250 µm opaque Makrofol^{™} ID 4-4 white |
| 50 µm transparent Makrofol^{™} DE 1-4 (laser markable) |
| 125 µm transparent Makrofol^{™} DE 1-1 (non-laser markable) |

The security laminate SL-3 was laminated onto the polycarbonate identity card ID-A using a hot melt foil Scapa^{™} Thermofoil G160 in a Codor^{™} LPP650 laminator set at 100°C and a speed of 40 cm/min.

The polycarbonate identity card ID-A laminated with the security laminate SL-3 was laser marked with a first image containing six squares (9 x 9 mm) of grey levels using a Rofin RSM Powerline E laser (10 W) with settings 29 ampere and 22 kHz. The lasering through the thermosensitive layer created an image in the laser markable Makrofol DE 1-4 layer but did not induce visual changes in the thermosensitive layer.

A second image partially overlapping with the first image was applied to the thermosensitive layer by printing with a Drystar^{™} 2000 thermographic printer from AGFA HEALTHCARE. This printing step only caused the thermosensitive layer to exhibit a neutral black image tone while no change was observed in the laser markable layer.

Then, as a simulation of falsification, the card was again exposed to laser light (same conditions as above) in an effort to add optical density in the laser markable layer. In the areas of the second image the laser caused a red discoloration of the neutral black image in the thermosensitive layer. Thus an effort to alter an image can be easily detected at visual inspection of the card.

## Claims

1. A security laminate for securing a security document comprising
a) a biaxially stretched polyethylene terephthalate support; and
b) a thermosensitive layer coated on the support;
wherein the thermosensitive layer contains a binder, a substantially light-insensitive organic silver salt, an organic reducing agent and a toning agent selected from the group consisting of phthalimides, phthalazinones, benzoxazine diones and naphthoxazine diones.

2. The security laminate according to claim 1 wherein the substantially light-insensitive organic silver salt is selected from the group consisting of silver laurate, silver palmitate, silver stearate, silver hydroxystearate, silver oleate and silver behenate and mixtures thereof.

3. The security laminate according to claim 1 or 2 wherein the subbing layer contains a copolymer selected from the group consisting of a sulfonated polyester copolymer, a vinylidene copolymer, a vinylchloride copolymer and a polyester urethane copolymer.

4. The security laminate according to any one of claims 1 to 3
wherein the organic reducing agent is selected from they group consisting of catechol, 3-(3,4-dihydroxyphenyl) propionic acid, 1,2-dihydroxybenzoic acid, gallic acid, methyl gallate, ethyl gallate, propyl gallate, tannic acid, and an 3,4-dihydroxybenzoic acid esters.

5. The security laminate according to any one of claims 1 to 4
wherein the reducing agent is image wise present in the thermosensitive layer according to a security image.

6. The security laminate according any one of claims 1 to 5
wherein an infrared absorbing compound is image wise present in the thermosensitive layer according to a security image.

7. The security laminate according any one of claims 1 to 6
wherein a laser markable layer is present on the other side of the biaxially stretched polyethylene terephthalate support than the side coated with the thermosensitive layer.

8. A security document comprising the security laminate according to any one of claims 1 to 7 in such a manner that a laser marked image is viewed through the thermosensitive layer.

9. A method of manufacturing a security document including the steps of:
a) providing a security laminate as defined by any one of claims 1 to 7;
b) providing a security document precursor containing a laser markable element;
c) laminating the security laminate on the security document precursor.

10. The method according to claim 9 wherein, in order, a first image is laser marked in the laser markable element and a second image is added to the thermosensitive layer by a thermal developing means.

11. The method according to claim 10 wherein the thermal developing means is a thermal print head.

12. The method according to claim 10 wherein the thermal developing means is a hot stamp.

13. The method according to any one of claims 9 to 12 wherein the larger optical densities of an image are laser marked as the first image and the smaller optical densities of the image are applied by the thermal print head as the second image.

14. The method according to any one of claims 9 to 12 wherein a polyurethane hot melt layer is located between the thermosensitive layer and the laser markable element.

15. Use of thermal energy reciprocity failure on the image tone of an image in a thermosensitive layer to hinder or prevent falsification of a security document.
